# EUROPEAN PATENT APPLICATION

(11) **EP 2 921 798 A1**
(43) Date of publication of application: **23.09.2015**
(21) Application number: 13855823.4
(22) Date of filing: 17.09.2013
(51) Int. Cl.: F24J 2/14, F03G 6/00

(54) **LIGHT COLLECTION DEVICE FOR SOLAR POWER GENERATION**

(30) Priority: 16.11.2012 JP 2012252557
(71) Applicant: Chiyoda Corporation, Kanagawa 220-8765 (JP)
(72) Inventor: SAITO, Hirokazu, Yokohama-shi Kanagawa 220-8765 (JP); SUZUKI, Toshihisa, Yokohama-shi Kanagawa 220-8765 (JP)
(74) Representative: Trinks, Ole
(86) International application number: PCT/JP2013/005480
(87) International publication number: WO 2014/076859

(57) **Abstract**

A solar-thermal collector (10) includes a shaft (13) supported by stands, a plurality of plate-like arms (14), which are secured to the shaft (13) and arranged at intervals in the direction of length of the shaft (13), a reflector (15), which is supported by two adjacent arms (14) and which reflects and concentrates the sunlight, and a spacer (17), which defines the spacing between the two adjacent arms (14) and which is provided between the two adjacent arms (14).

## Description

### [Technical Field]

The present invention relates to a light condensing apparatus for solar thermal power generation (solar-thermal collector or solar collector), a solar thermal power generation system using said solar-thermal collector, and a method for manufacturing a support for a reflector that reflects and concentrates the sunlight.

### [Background Art]

The following solar thermal power generation method is known in the conventional practice. The sunlight is concentrated onto a heat collecting tube by a light condensing apparatus for use in the generation of solar thermal power that uses a curved surface reflecting mirror. And a fluid, such as oil, flowing through the heat collecting tube is heated and a steam turbine is rotated using the fluid heated there so as to generate the electric power. Hereinafter, this light condensing apparatus for use in the generation of solar thermal power will be referred to as a "solar-thermal collector" or "solar collector" also. The solar thermal power generation method is low, in introduction costs, than the photovoltaic power generation method. Furthermore, the solar thermal power generation method can generate electricity on a 24-hour basis. Also, the solar thermal power generation method does not use any fuel and is therefore advantageous in that the cost of fuel can be reduced and the emission of carbon dioxide can be suppressed.

The conventional solar-thermal collector is of such a structure that reflecting mirrors are supported by use of support members having a pipe truss structure (see Reference (1) in the following Related Art List, for instance). Use of the pipe truss structure can construct a highly rigid support member of the reflecting mirror.

### [Related Art Documents]

[Patent Document 1] United States Patent Application Publication No. US2010/0043776.

### [Disclosure of the Invention]

### [Problems to be solved by the Invention]

However, constructing the support member having the pipe truss structure requires a lot of labor and cost in the joining of pipes. Further, the support members having the pipe truss structure are bulky when they are transported to an installation location and therefore the efficiency of transporting them thereto is low. Thus the solar-thermal collector, where the pipe truss structure is used as the support members of the reflecting mirrors, tends to be costly.

The present invention has been made in view of the foregoing circumstances, and a purpose of the invention is to provide a low-cost solar-thermal collector and a low-cost solar thermal power generation system while a sufficient rigidity is ensured.

### [Means for Solving the Problem]

In order to resolve the foregoing problems, a solar-thermal collector according to one embodiment of the present invention includes: a shaft supported by stands; a plurality of arms configured to be secured to the shaft and arranged at intervals in a direction of length of the shaft; a reflector configured to reflect and concentrate the sunlight, the reflector being supported by two adjacent arms; and a spacer configured to define spacing between the two adjacent arms, the spacer being provided between the two adjacent arms.

The arm may be formed in a flat plate shape.

The spacer may be hollowed out to have an inner space therein, the arm may have a hole, and the solar-thermal collector may further include a rod configured to be inserted to the inner space of the spacer and the hole of the arm, the rod being used to hold in the spacer between the two adjacent arms.

The rod may be so provided as to penetrate the holes of the plurality of arms and the inner spaces of a plurality of spacers, and one end of the rod may be fixed to one outermost arm, whereas the other end thereof may be fixed to the other outermost arm.

Another embodiment of the present invention relates to a solar thermal power generation system. The solar thermal power generation system includes: the above-described solar-thermal collector; a heat collecting tube configured to receive light concentrated by the solar-thermal collector; a steam turbine configured to be rotated by steam generated using a heated fluid in the heat collecting tube; and a power generator configured to generate electricity through rotation of the steam turbine.

Still another embodiment of the present invention relates to a method for manufacturing a support for a reflector that reflects and concentrates the sunlight. The method includes the steps of: fixing a plurality of arms to a shaft wherein the plurality of arms are arranged at intervals in a direction of length of the shaft; and providing a spacer between two adjacent arms wherein the spacer defines spacing between the two adjacent arms.

The spacer may be hollowed out to have an inner space therein, the arm may have a hole, and the step of providing the spacer may include the step of holding the spacer between the two adjacent arms by inserting a rod to the inner space of the spacer and the holes of the two adjacent arms.

Optional combinations of the aforementioned constituting elements, and implementations of the invention in the form of apparatuses, methods, systems, and so forth may also be effective as additional modes of the present invention.

### [Effects of the Invention]

The present invention provides a low-cost solar-thermal collector and a low-cost solar thermal power generation system while a sufficient rigidity is ensured.

### [Brief Description of the Drawings]

FIG. 1 is a perspective view of a solar-thermal collector according to an embodiment of the present invention;
FIG. 2 is a front view of a solar-thermal collector;
FIG. 3 is a cross-sectional view taken along the line A-A of the solar-thermal collector shown in FIG. 2;
FIG. 4 is a diagram to explain a cross-sectional structure of a reflector;
FIG. 5 is a cross-sectional view taken along the line B-B of the solar-thermal collector shown in FIG. 3;
FIG. 6 shows how a single piece of reflector is supported by two adjacent arms;
FIG. 7 shows a solar-thermal collector with the reflectors removed;
FIG. 8 is a diagram to explain a method for fixing a spacer;
FIG. 9 shows how spacers are provided between arms;
FIG. 10 shows how reflectors are provided between arms;
FIG. 11 is a diagram to explain a structure of a solar-thermal collector according to another embodiment of the present invention; and
FIG. 12 is a diagram to explain a solar thermal power generation system using a solar-thermal collector according to an embodiment.

### [Modes for Carrying Out the Invention]

The invention will now be described by reference to the preferred embodiments.

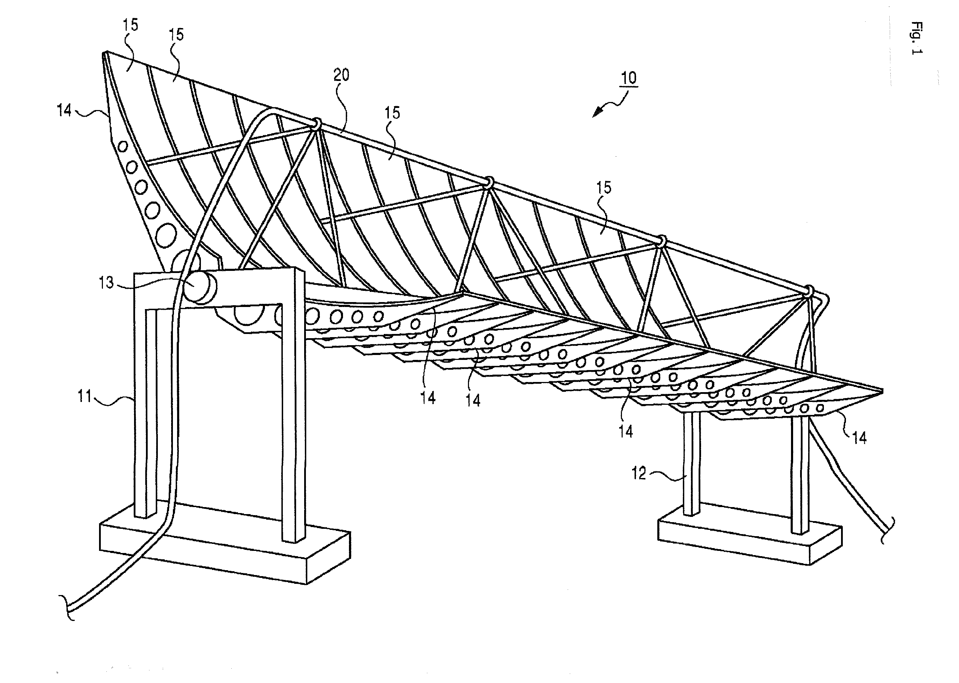

FIG. 1 is a perspective view of a light condensing apparatus for use in the generation of solar thermal power 10 (hereinafter referred to as "solar-thermal collector 10" or simply "solar collector 10") according to an embodiment of the present invention. As illustrated in FIG. 1, the solar-thermal collector 10 is comprised mainly of stands 11 and 12 on the ground, a shaft 13, which is rotatably supported by the stands 11 and 12, a plurality of arms 14, which are fixed to the shaft 13 and are arranged at intervals along the length thereof, and a plurality of reflectors 15 supported by the arms 14. The reflection surfaces of reflectors 15 are formed with a parabolic-cylindrical surface such that the vertical cross section of the reflection surfaces thereof relative to the shaft 13 is parabolic.

As shown in FIG. 1, a heat collecting tube 20 is provided in front of the reflectors 15 and is supported in parallel with the shaft 13. A fluid such as oil flows through the heat collecting tube 20. The fluid is circulated by a not-shown pump.

In the solar-thermal collector 10, the sunlight is concentrated onto the heat collecting tube 20 using the reflectors 15 and thereby the fluid flowing through the heat collecting tube 20 is heated. The fluid heated by the solar-thermal collector 10 is sent to a heat exchanger. The heat exchanger generates steam using the heated fluid and then sends the steam to a steam turbine. The steam turbine rotates a turbine using the steam so as to generate electricity.

The solar-thermal collector 10 may include a rotating apparatus (not shown), which rotates the reflectors 15 around the shaft 13. If, for example, the reflectors 15 are rotated in such a manner as to track the positions of the sun, the fluid can be efficiently heated and therefore the power generation efficiency can be enhanced.

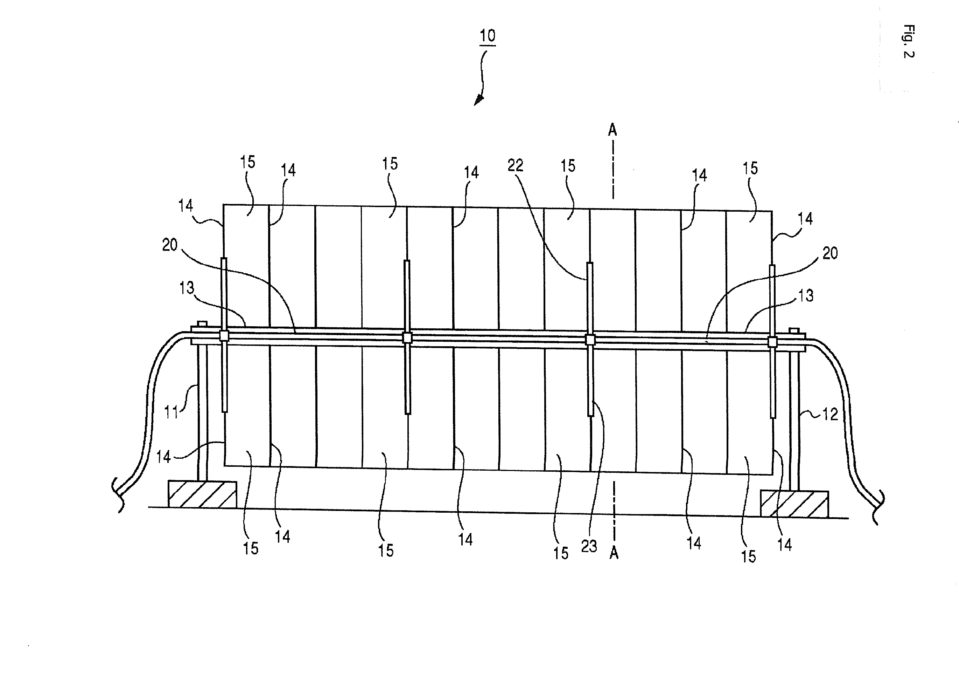

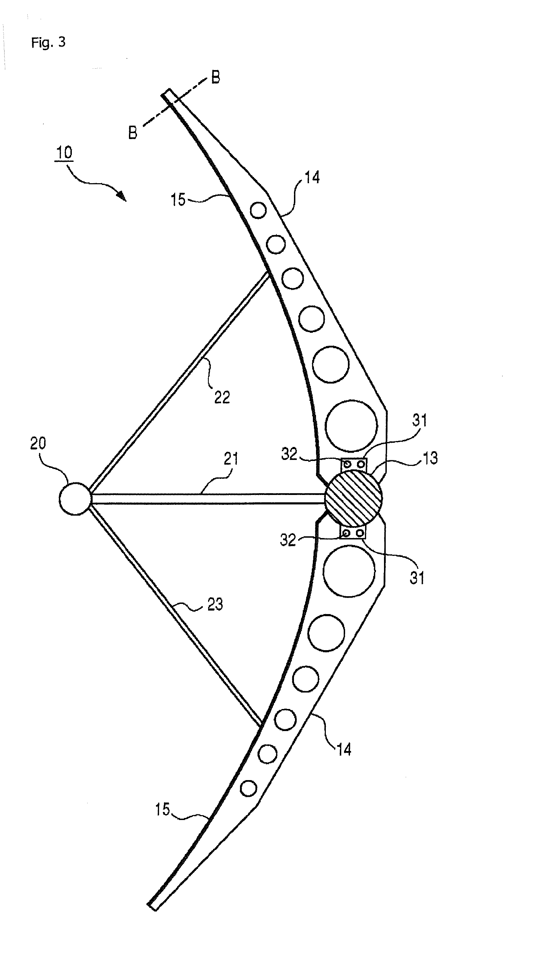

FIG. 2 is a front view of the solar-thermal collector 10. FIG. 3 is a cross-sectional view taken along the line A-A of the solar-thermal collector 10 shown in FIG. 2.

As shown in FIG. 2, the solar-thermal collector 10 according to the present embodiment is configured such that the stands 11 and 12 are mounted upright on the ground and the both ends of the shaft 13 are supported by the stands 11 and 12. The shaft 13 may be a pipe made of steel, for instance. The diameter of the shaft 13 may be about several hundreds of millimeters (e.g., about 500 mm to about 700 mm (e.g., about 600 mm), for instance.

A plurality of arms 14 are secured to the shaft 13 at predetermined intervals along the length thereof. Each arm 14, which is a plate-like body whose thickness is about several millimeters (e.g., about 6 mm), may be formed of steel or the like, for instance. As shown in FIG. 3, each arm 14 is formed such that one side surface thereof is of a parabolic shape. A bracket 31, by which to mount the arm 14 on the shaft 13 at predetermined intervals, is formed in the shaft 13. And the arm 14 is secured to the bracket 31 using bolts 32 and nuts. The arms 14 may be fixed to the brackets 31 of the shaft 13 by welding, for instance. In this manner, the solar-thermal collector 10 employs a simple structure where the plate-like arms 14 are simply fixed to the shaft 13. This simple structure can reduce the manufacturing cost without requiring a lot of labor and cost in the joining of pipes, as compared with the pipe truss structure employed in the aforementioned Reference (1), for instance. Also, since this simple structure saves space otherwise occupied by bulky components, the transportation cost can be reduced.

In the present embodiment, as shown in FIG. 2, thirteen arms 14 extend upward from the shaft 13. Also, thirteen arms 14 extend downward from the shaft 13. A single piece of reflector 15 is provided between every two adjacent arms 14 along the length of the shaft 13. Thus, twelve reflectors 15 are provided above the shaft 13, whereas twelve reflectors 15 are also provided below the shaft 13. Every two reflectors 15 vertically lined relative to the shaft 13 are arranged line-symmetrically with respect to the shaft 13, thereby forming the reflection surfaces of a parabolic-cylindrical shape.

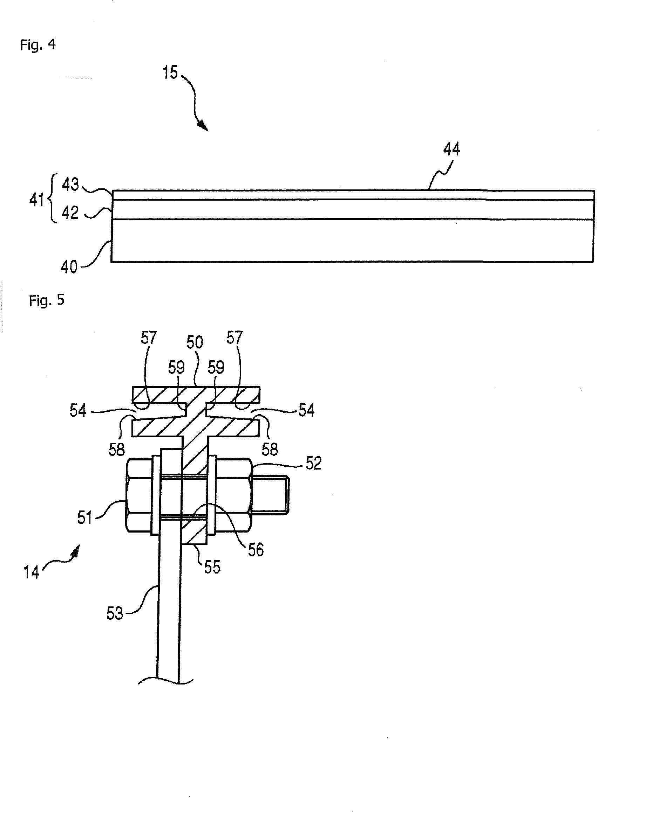

FIG. 4 is a diagram to explain a cross-sectional structure of the reflector 15. As shown in FIG. 4, the reflector 15 is of such a structure that a film mirror 41 is pasted on top of a flexible flat sheet 40. The flexible flat sheet 40 may be a metallic sheet (e.g., steel plate or aluminum plate) whose thickness is about several millimeters (e.g., about 1 mm to about 2 mm), for instance. The film mirror 41 is of such a structure that a reflective layer 43 is provided on top of a flexible film substrate 42. The film substrate 42 may be a known resin-made substrate and may be acrylic or polyester-based film, for instance. The reflective layer 43 may be a metallic reflective layer (e.g., silver reflective layer) formed on the film substrate 42 by vapor-depositing. The reflector 15 formed as above has flexibility.

In the solar-thermal collector 10 according to the present embodiment, the reflector 15, which is a flat plate-like reflector before it is mounted on the arm 14, is bent when it is mounted on the arm 14. Thus a reflection surface 44 of the reflector 15 is formed into a parabolic-cylindrical curved surface so that the reflection surface 44 thereof can be suited to the concentration of sunlight. A detailed description will be given later of a support where the arms 14 support the reflectors 15.

In front of the reflector 15, the heat collecting tube 20 is supported by support members 21, 22 and 23 as shown in FIG. 3. The heat collecting tube 20 is supported thereby such that the center of the heat collecting tube 20 is located at the focal point of a parabolic-cylindrical refection surface of the reflectors 15. Since the sunlight reflected by the parabolic-cylindrical reflection surface is concentrated on the focal point of the parabolic-cylindrical surface, provision of the heat collecting tube 20 in the aforementioned location enables the sunlight to be efficiently reflected and concentrated onto the heat collecting tube 20.

FIG. 5 is a cross-sectional view taken along the line B-B of the solar-thermal collector 10 shown in FIG 3. FIG. 5 is an enlarged sectional view of an inner part of the arm 14, and is a diagram to explain the support by which to support the reflectors 15. In the present embodiment, the arm 14 is comprised of a plate-like arm body 53, which extends from the shaft 13 and has a parabolic side surface, and a reflector supporting section 50, which is used to immovably support the reflector 15, provided along the inner part of the arm body 53.

The reflector supporting section 50 includes two grooves 54, into which ends of the reflectors are inserted, and a securing section 55, which is used to secure the reflector supporting section 50 to the arm body 53. The securing section 55 has a bolt hole 56, and the reflector supporting section 50 is secured to the arm body 53 using a bolt 51 inserted into the bolt hole 56 and a nut 52. In the present embodiment, the arm 14 is structured such that the arm body 53 and the reflector supporting section 50 are separately formed and then coupled together using the bolt 51 and nut 52. However, the arm body 53 and the reflector supporting section 50 may be formed integrally with each other and therefore may be formed as a single unit.

The two grooves 54 in the reflector supporting section 50 are each formed in a U-shape and are each comprised of a first face 57 and a second face 58, which face each other at a predetermined interval, and a bottom face 59. The two grooves 54 are so formed that they are opened in the mutually opposite directions with the bottom faces 59 disposed therebetween. The first face 57 is located in the inside direction of a parabolic-cylinder than the second face 58, namely located at a heat collecting tube side than the second face 58.

In the present embodiment, the first face 57 serves as a "reflection-surface forming face" that defines a curved surface shape of the reflection surface 44 of the reflector 15. More specifically, the first face 57 is formed with a parabolic-cylindrical surface such that the vertical cross section thereof relative to the shaft is parabolic. The reflector 15 is of a flat planar shape before it is assembled. However, when it is assembled, the reflection surface 44 of the reflector 15 is bent along the first face 57 and thereby the reflection surface 44 is formed into a predetermined parabolic-cylindrical surface.

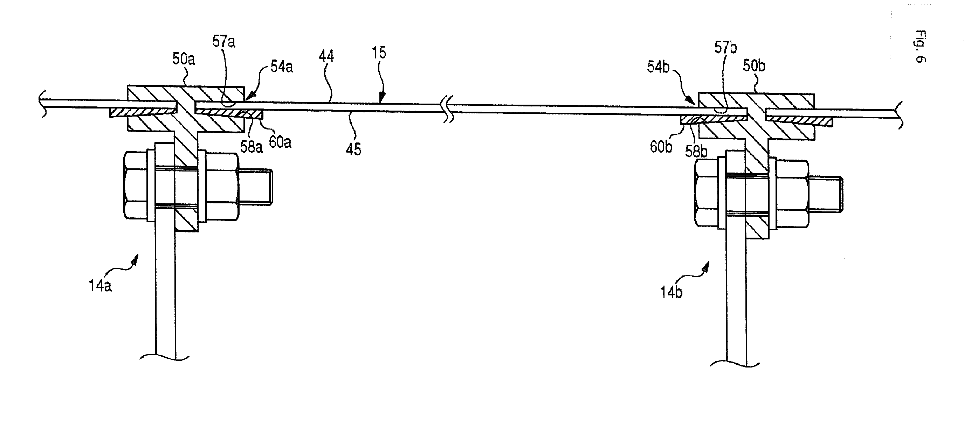

FIG. 6 shows how a single piece of reflector 15 is supported by two adjacent arms 14a and 14b. As shown in FIG. 6, a groove 54a in a reflector supporting section 50a of one arm 14a and a groove 54b in a reflector supporting section 50b of the other adjacent arm 14b are face each other. Inserting the both ends of the reflector 15 into the two grooves 54a and 54b enables the reflector 15 to be supported by the arms 14a and 14b with the reflector 15 being bent in the curved surface shape.

In this structure according to the present embodiment, plate members 60a and 60b, whose cross section is formed in a wedge shape, are press-fitted between both ends of a back side 45 of the reflector 15 and second faces 58a and 58b, respectively, in order that the both ends of the reflection surface 44 of the reflector 15 can be reliably adhered tightly to first faces 57a and 57b that are reflection-surface forming faces. In the present embodiment, the spacing between the first faces 57a and 57b and the second faces 58a and 58b is set larger than the thickness of the reflector 15 to make it easier for the both ends of the reflection surface 44 to be inserted into the grooves 54a and 54b. Thus, if no wedge-shaped plate members 60a and 60b are to be press-fitted, the both ends of the reflection surface 44 of the reflector 15 will not be attached firmly to the first faces 57a and 57b, which are the reflection-surface forming faces, and therefore the reflection surface 44 may possibly not be formed with a desired parabolic-cylindrical surface. If the reflection surface 44 is not formed as the parabolic-cylindrical surface designed primarily, the expected light collection efficiency will not be attained and therefore the power generation efficiency may deteriorate.

In the light of this, the both ends of the reflector 15 are adhered tightly to the first faces 57a and 57b using the wedge-shaped plate members 60a and 60b. Thereby, the reflection surface 44 of the reflector 15 can be reliably formed with the desired parabolic-cylindrical surface. Forming the reflection surface 44 of the reflector 15 with a designed curved surface increases the sunlight collection efficiency and therefore can improve the power generation efficiency. The wedge-shaped plate member may be configured such that the plate member is divided in the length direction of the arm or it is provided across entire length of the arm. Also, the plate member and the reflector may be secured to the reflector supporting section using a bolt after the wedge-shaped plate member is press-fitted between the back side of the reflector and the second face.

Instead of the embodiment shown in FIG. 6, the following structure may be employed. That is, the second faces 58a and 58b serve as the reflection-surface forming faces, and the wedge-shaped plate members 60a and 60b are driven in between the first faces 57a and 57b and the both ends of the reflection surface 44. In this case, however, the area of reflection surface 44 gets smaller due to the wedge-shaped plate members 60a and 60b, and the reflection surface 44 may possibly be damaged when the wedge-shaped plate members 60a and 60b are driven in therebetween. Thus it is desirable, as with the embodiment shown in FIG. 6, that the reflector 15 be arranged such that the reflection surface 44 faces the first faces 57a and 57b (reflection-surface forming faces) and the back side 45 faces the second faces 58a and 58b and that the wedge-shaped plate members 60a and 60b be configured such that the plate members 60a and 60b are driven in between the second faces 58a and 58b and the both ends of the back side 45 of the reflector 15.

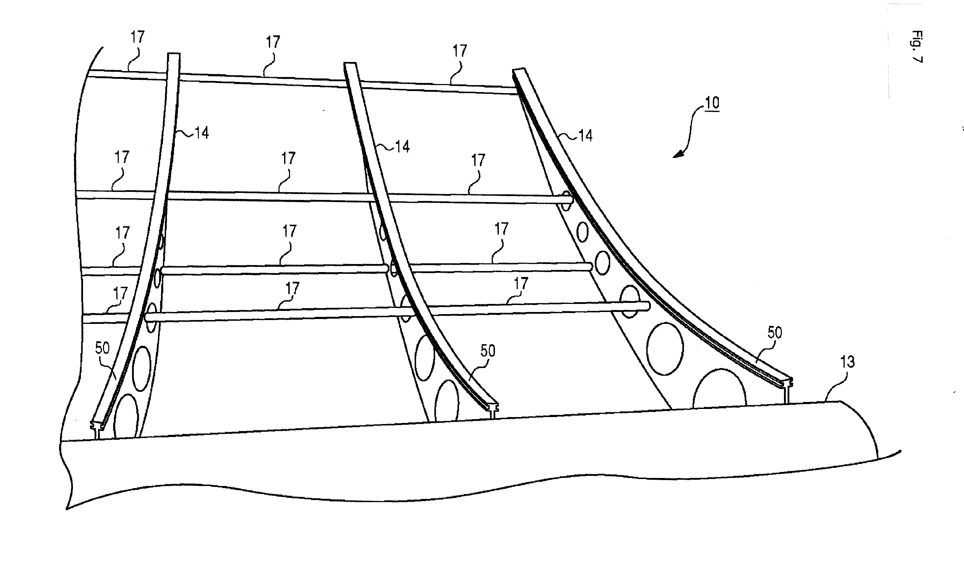

FIG. 7 shows a solar-thermal collector 10 with the reflectors removed. As shown in FIG. 7, in the solar-thermal collector 10 according to the present embodiment, spacers 17 are provided between every two arms 14 which are disposed adjacent along the length of the shaft 13. The spacer 17 is a tubular hollow component and is preferably formed of the same material (e.g., steel) as that constitutes the shaft 13 and the arm 14 in consideration of thermal expansion. Although, in the present embodiment, the four spacers 17 are provided between a pair of adjacent arms 14, the number of spacers 17 provided is not limited to any particular number and may vary depending on the length of the arm 14 and so forth. As shown in FIG. 7, it is preferable that a plurality of spacers 17 provided between each pair of adjacent arms 14 are provided in a manner such that the spacers 17 are located inside and outside the arm 14 alternately for the purpose of enhancing the rigidity of the arm 14.

As described above, the present embodiment employs a simple construction where the plate-like arms 14 are simply fixed to the shaft 13. Thus an inexpensive solar-thermal collector can be achieved. If, however, the plate-like arms 14 are simply fixed to the shaft 13, a sufficient rigidity of the arm 14 may not possibly be ensured. Where the rigidity of the arm 14 is not sufficient, the spacing between the adjacent arms 14 may possibly be controlled to a designed value near the shaft 13. At the same time, a shift or deviation from the designed value on account of a deflection of the arms 14 or the like may be more likely to occur in the distance between the two adjacent arms 14 as a location on the arm 14 gets farther away from the shaft 13. In such a case, it is difficult for the reflector to be inserted to the grooves of the reflector supporting section 50 of the two adjacent arms 14. Also, if the rigidity of the arms 14 is not sufficient, the arms 14 will be much deflected when strong wind blows, for instance, and an abnormality such as deformation may possibly be caused in the reflectors provided between the two adjacent arms 14.

In the light of this, as with the solar-thermal collector 10 according to the present embodiment, provision of the spacers 17 between the two arms 14 which are disposed adjacent along the length of the shaft 13 can define the spacing of the arms 14 at a predetermined interval and also ensure the rigidity of the arms 14.

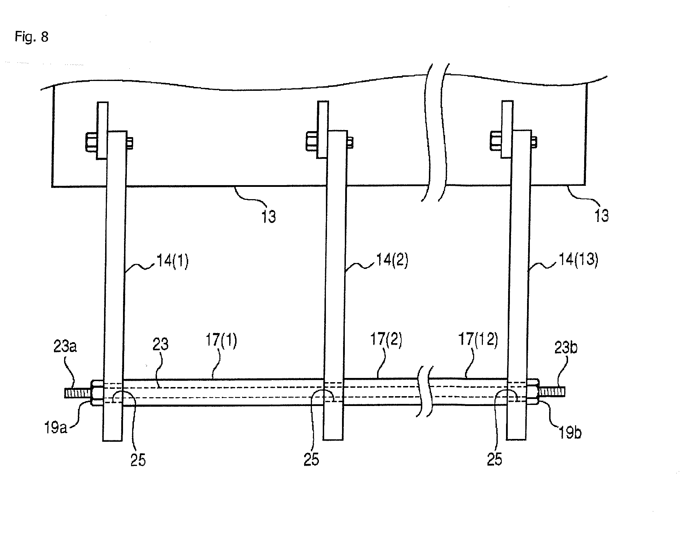

FIG. 8 is a diagram to explain a method for fixing the spacers 17. Spacers 17 arranged in a single row only are shown in FIG. 8 for simplicity. As shown in FIG. 8, a first arm 14(1), a second arm 14(2), ..., and a thirteenth arm 14(13) are provided in the shaft 13 along the length thereof. A first spacer 17(1), a second spacer 17(2), ..., and a twelfth spacer 17(12) are provided in between those adjacent arms. Each spacer 17 is interposed and held between two adjacent arms, and the length of each spacer 17 is so designed that the distance or spacing of two adjacent arms is set to a predetermined value. In the present embodiment, the first spacer 17(1), the second spacer 17(2), ..., and the twelfth spacer 17(12) are provided in a straight line from one outermost arm, which is the first arm 14(1), to the other outermost arm, which is the thirteenth arm 14(13).

As described earlier, each spacer 17 is formed in a tubular hollow shape. Also, each arm 14 has a hole 25 in a spacer setting position of each arm 14. The hole diameter of the hole 25 is smaller than the outside diameter of the spacer 17. In the present embodiment, the spacer 17 is held by a rod 23 that is inserted into both the interior of this spacer 17 and the holes 25 of its two adjacent arms 14. The rod 23 is so provided as to penetrate the holes of the first arm 14(1), the second arm 14(2), ..., and the thirteenth arm 14(13) and the interiors of the first spacer 17(1), the second spacer 17(2), ..., and the twelfth spacer 17(12). This rod 23 extends in a straight line from an outer side of one outermost arm, which is the first arm 14(1), to an outer side of the other outermost arm, which is the thirteenth arm 14(13). Both ends 23a and 23b of the rod 23 are threaded. A nut 19a is fitted to a screw at one end 23a of the rod 23 and then rotated, and thereby the nut 19a is tightened to secure the first arm 14(1). As a result, the one end 23a of the rod 23 is secured to the first arm 14(1). Also, a nut 19b is fitted to a screw at the other end 23b of the rod 23 and then rotated, and thereby the nut 19b is tightened to secure the thirteenth arm 14(13). As a result, the other end 23b of the rod 23 is secured to the thirteenth arm 14(13). When the both ends 23a and 23b of the rod 23 are tightened with the nuts 19a and 19b, respectively, the spacing or interval between the arms 14 is regulated to a predetermined value by the spacers 17. Thus the rigidity of the first arm 14(1), the second arm 14(2), ..., and the thirteenth arm 14(13) is improved.

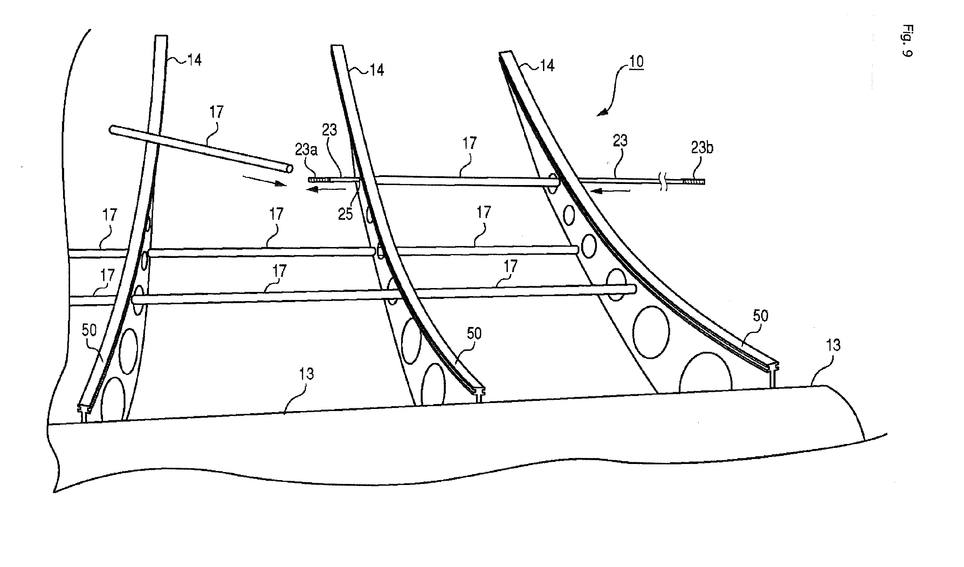

FIG. 9 shows how the spacers 17 are provided between the arms 14. The plate-like arms 14 are transported to an installation site while the arms 14 are removed from the shaft 13. When the solar-thermal collector 10 is to be installed at the site, the stands 11 and 12 are first mounted on the ground (see FIG. 1) and the shaft 13 is supported by the stands 11 and 12. Then, the arms 14 are secured to the shaft 13. Then, as shown in FIG. 9, the rod 23 is inserted into the holes 25 of the arms 14 and the interiors of the spacers 17 alternately and thereby the rod 23 penetrates from one outermost arm 14 to the other outermost arm 14. Then, the both ends 23a and the 23b of the rod 23 are tightened with the nuts 19a and 19b. FIG. 7 shows how the solar-thermal collector 10 looks like after all the spacers have been mounted.

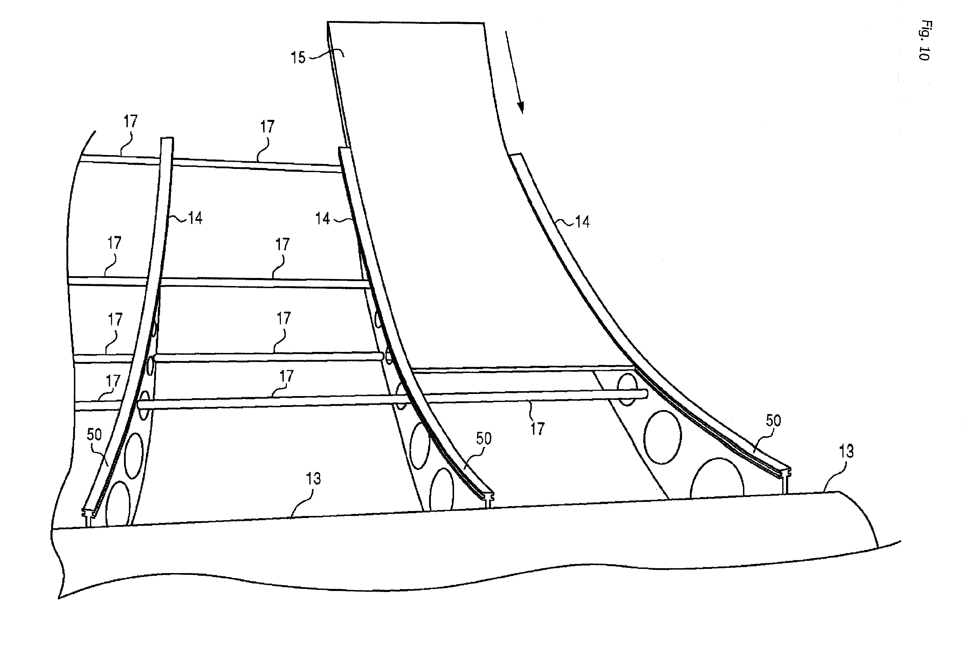

FIG. 10 shows how the reflectors 15 are provided between arms 14. In the present embodiment, the reflectors 15 manufactured at a factory are transported, as flat sheets, to an installation location. Then, as shown in FIG. 10, the both ends of the reflector 15 are inserted, from extended tip parts of the arms 14, into the grooves of the reflector supporting sections 50 of two adjacent arms 14. After the reflector 15 has been inserted thereinto, not-shown wedge-shaped plate members are driven in between the second faces of the reflector supporting sections and the both ends of the back side of the reflector 15, respectively. As a result, the both ends of the reflection surface of the reflector 15 are attached firmly to the reflection-surface forming faces (first faces) of the reflector supporting sections 50 and thereby the reflection surface of the reflector 15 can be formed with a desired parabolic-cylindrical surface.

As described above, by employing the solar-thermal collector 10 according to the present embodiment, the support for the reflector 15 is formed by adopting the simple structure where the plate-like arms 14, the spacers 17 and the rods 23 are used. In the present embodiment, the structure is more simplified than the conventional pipe truss structure, so that the supports for the reflectors 15 can be formed at low cost. Since the plate-like arms 14 are used, less space is occupied by the arms 14 and other components than the conventional pipe truss structure when they are transported. Thus, the transportation efficiency can be improved. At the same time, use of the spacers 17 and the rods 23 in the present embodiment raises the rigidity of the arms 14. Thus the present embodiment can provide a low-cost solar-thermal collector while a sufficient rigidity is ensured.

Furthermore, by employing the solar-thermal collector 10 according to the present embodiment, the reflectors 15 can be transported as the flat sheets to the installation location. Thus, less space is occupied by the reflectors 15 and other components when they are transported. Hence the transportation efficiency can be improved. Also, simple flat-shape reflectors 15 are manufactured at the factory and then the high-precision reflection surfaces of a parabolic-cylindrical shape can be formed at the installation site by using a simple method as described above. Thus the manufacturing cost can be reduced as compared with the case where the glass-made reflecting mirrors of the parabolic-cylindrical shape are produced at the factory.

In the above-described embodiment, the structure is adopted where the spacers 17 are held between the two arms 14 using the rods 23. However, the holding structure of the spacers 17 according to the present embodiment is not limited thereto. For example, instead of using the rods, a structure may be adopted where the ends of the spacers 17 are secured to the arms 14 by welding, screws or the like, for instance, so as to hold the spacers 17 between the two arms 14.

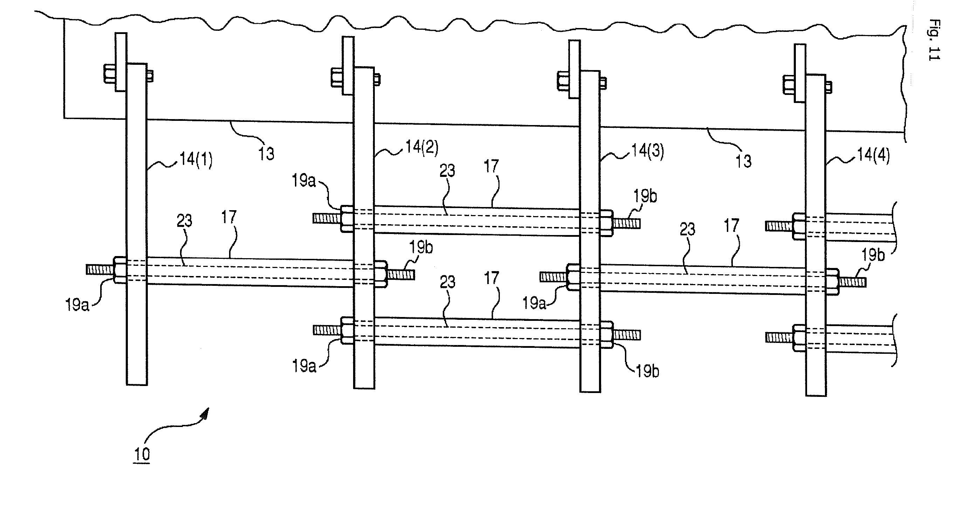

FIG. 11 is a diagram to explain a structure of the solar-thermal collector 10 according to another embodiment of the present invention. Similar to FIG. 8, FIG.11 shows a solar-thermal collector 10 with the reflectors removed. In the above-described embodiment, a plurality of spacers 17 are provided in a straight line from one outermost arm 14 to the other outermost arm 14, and a single rod 23 penetrates the plurality of those spacers 17 in a straight line. In contrast thereto, in the embodiment shown in FIG. 11, a plurality of spacers 17 are provided in a stepped-down and -up manner, namely at alternately different levels, for every pair of two adjacent arms 14. In the present embodiment, the rod 23 penetrates only a single spacer 17 provided between two adjacent arms 14. Then the both ends of the rod 23 are secured to the two adjacent arms 14 by tightening the both ends of the rod 23 with the nuts 19a and 19b. As a result, the spacing or distance between the two adjacent arms 14 is regulated to a predetermined value by the spacers 17. Providing the spacers 17 in the same manner as this in between every two adjacent arms 14 improves the rigidity of all the arms 14. If, as with the embodiment shown in FIG. 11, each spacer 17 is provided alternately at a different level instead of the configuration where a plurality of spacers 17 are provided in a straight line, the length of each rod 23 can be made shorter, which is advantageous in that the transportation becomes easier.

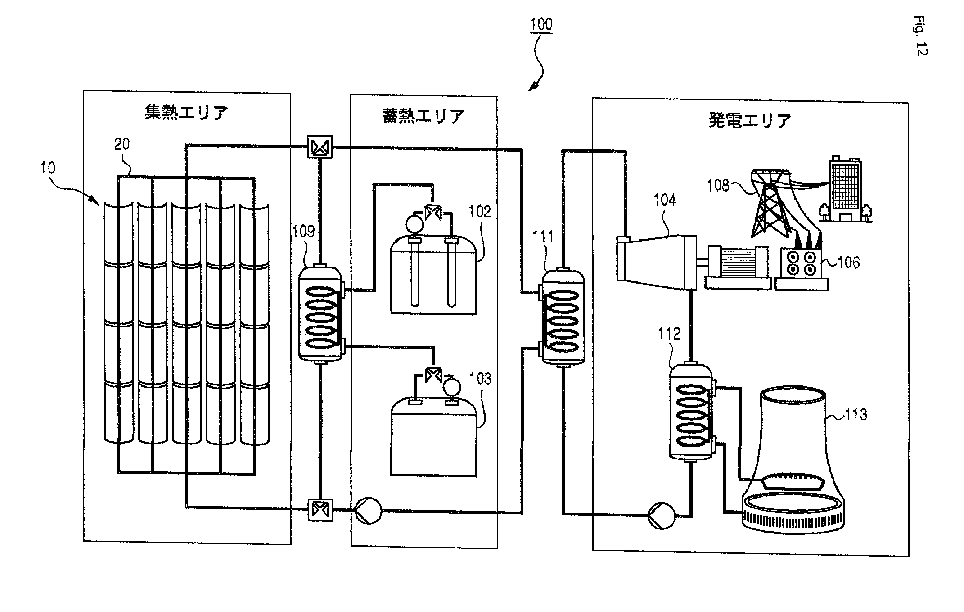

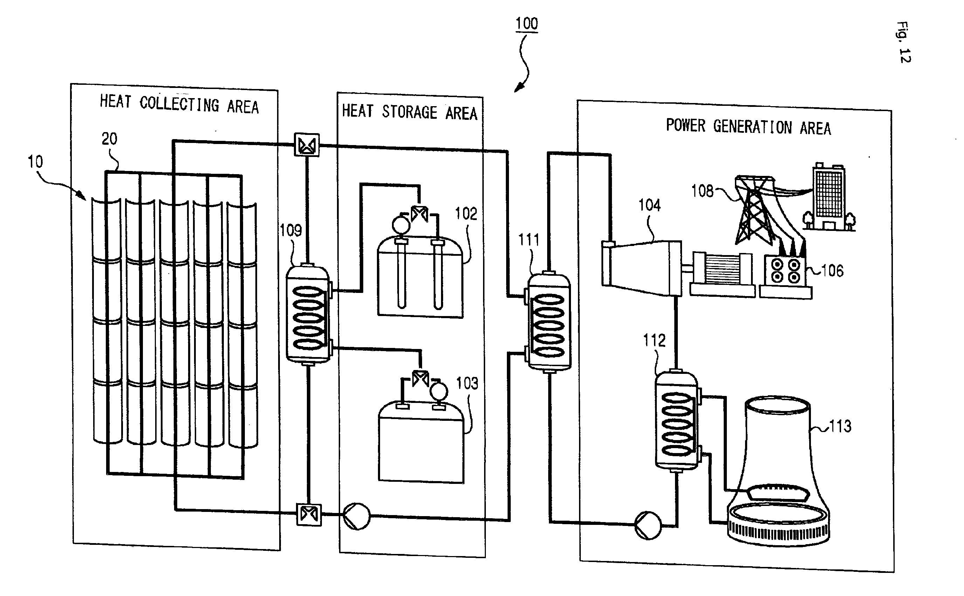

FIG. 12 is a diagram to explain a solar thermal power generation system 100 using the solar-thermal collector 10 according to the above-described embodiments. As shown in FIG. 12, the solar thermal power generation system 100 is mainly divided into three main areas, which are a heat collecting area, a heat storage area, and a power generation area.

The heat collecting area is comprised mainly of the above-described solar-thermal collector 10, the heat collecting tube 20, and the not-shown pump for circulating the fluid within the heat collecting tube. In the heat collecting area, the sunlight is concentrated onto the heat collecting tube 20 by the solar-thermal collector 10 and then the fluid circulating within the heat collecting tube 20 is heated. The thus heated fluid is sent to the heat storage area.

The heat storage area is comprised mainly of a hot tank 102, a cold tank 103, and a first heat exchanger 109. If there is a heat storage exceeding a required electric power, a low-temperature fluid in the cold tank 103 will be warmed up through the first heat exchanger 109 and then transferred to the hot tank 102 where the heat is stored. Storing the heat of the heated fluid using the hot tank 102 enables the electric power generation when not enough heat has been collected or at night when the sunlight is not available.

The power generation area is comprised mainly of a steam turbine 104, a power generator 106, a second heat exchanger 111, a third heat exchanger 112, and a cooling tower 113. The second heat exchanger 111 generates steam using the heated fluid, and the steam turbine 104 rotates the turbine using the steam. The power generator 106 generates electricity through the rotation of the turbine and transmits the thus generated electricity through power transmission lines 108. The third heat exchanger 112 changes steam back to fluid and the cooling tower 113 cools this fluid.

By employing the above-describe low-cost solar-thermal collector 10, the construction cost of the solar thermal power generation system 100 can be reduced.

The present invention has been described based upon illustrative embodiments. These embodiments are intended to be illustrative only and it will be obvious to those skilled in the art that various modifications to the combination of constituting elements and processes could be developed and that such modifications are also within the scope of the present invention.

### [Explanation of Reference Numerals]

- 10: Solar-thermal collector
- 13: Shaft
- 14: Arm
- 15: Reflector
- 17: Spacer
- 20: Heat collecting tube
- 23: Rod
- 25: Hole
- 31: Bracket
- 40: Flexible flat sheet
- 41: Film mirror
- 42: Film substrate
- 43: Reflective layer
- 44: Reflection surface
- 50: Reflector supporting section
- 53: Arm body
- 54: Groove
- 57: First face
- 58: Second face
- 100: Solar thermal power generation system
- 104: Steam turbine
- 106: Power generator

### [Industrial Applicability]

The present invention can be utilized in a solar thermal power generation method.

## Claims

1. A solar-thermal collector comprising:
a shaft supported by stands;
a plurality of arms configured to be secured to the shaft and arranged at intervals in a direction of length of the shaft;
a reflector configured to reflect and concentrate the sunlight, the reflector being supported by two adjacent arms; and
a spacer configured to define spacing between the two adjacent arms, the spacer being provided between the two adjacent arms.

2. The solar-thermal collector according to claim 1, wherein the arm is formed in a flat plate shape.

3. The solar-thermal collector according to claim 1 or claim 2, wherein the spacer is hollowed out to have an inner space therein, and
wherein the arm has a hole,
the solar-thermal collector further comprising a rod configured to be inserted to the inner space of the spacer and the holes of the two adjacent arms, the rod being used to hold in the spacer between the two adjacent arms.

4. The solar-thermal collector according to claim 3, wherein the rod is so provided as to penetrate the holes of the plurality of arms and the inner spaces of a plurality of spacers, and
wherein one end of the rod is fixed to one outermost arm, and the other end thereof is fixed to the other outermost arm.

5. A solar thermal power generation system comprising:
the solar-thermal collector according to any one of claim 1 to claim 4;
a heat collecting tube configured to receive light concentrated by the solar-thermal collector;
a steam turbine configured to be rotated by steam generated using a heated fluid in the heat collecting tube; and
a power generator configured to generate electricity through rotation of the steam turbine.

6. A method for manufacturing a support for a reflector that reflects and concentrates the sunlight, the method comprising the steps of:
fixing a plurality of arms to a shaft wherein the plurality of arms are arranged at intervals in a direction of length of the shaft; and
providing a spacer between two adjacent arms wherein the spacer defines spacing between the two adjacent arms.

7. The method, for manufacturing a support, according to claim 6, wherein the spacer is hollowed out to have an inner space therein,
wherein the arm has a hole, and
wherein the step of providing the spacer includes the step of holding the spacer between the two adjacent arms by inserting a rod to the inner space of the spacer and the holes of the two adjacent arms.
